# EUROPEAN PATENT SPECIFICATION

(11) **EP 1 868 799 B1**
(45) Date of publication and mention of the grant of the patent: **11.03.2009**
(21) Application number: 06726563.7
(22) Date of filing: 30.03.2006
(51) Int. Cl.: B29D 30/24

(54) **TYRE BUILDING DRUM**
REIFENBAUTROMMEL
TAMBOUR DE CONFECTION DE PNEUS

(30) Priority: 30.03.2005 GB 0506363
(43) Date of publication of application: 26.12.2007
(73) Proprietor: Wyko Tire Technology Limited, Halesowen West Midlands B62 8WG (GB)
(72) Inventor: PAINTER, Brian, Dudley DY2 0XW (GB)
(74) Representative: Somervell, Thomas Richard
(86) International application number: PCT/GB2006/001156
(87) International publication number: WO 2006/103434

(56) References cited:
- EP-A- 0 432 993
- EP-A- 0 602 783
- WO-A-20/04012927
- GB-A- 483 927
- US-A- 2 603 581
- US-A- 3 038 526
- US-A- 6 058 999
- US-B1- 6 390 166

## Description

This invention relates to a tyre building drum of the kind incorporating a collapsible cylindrical deck upon which a tyre or part of a tyre carcass is to be constructed, the cylindrical deck being composed of a plurality of circumferentially abutting deck segments which can be collapsed inwardly to reduce the diameter of cylindrical deck to permit removal of a tyre or tyre carcass therefrom.

It has to be understood that tyre building drums can be used in a number of different stages in the construction of a tyre, and although drums of the present invention may be used in the construction of a tyre carcass or in the construction of a finished green tyre for vulcanisation, for convenience herein reference will be made simply to "tyre building" and to a "tyre" it being understood that these terms are intended to embrace the construction of subassemblies such as a tyre carcass.

The deck segments of the drum are carried from a hub rotatable with a main support/drive shaft of the drum. The interconnection between the hub and the deck segments can take a number of forms, but one convenient form utilises pivotting links which are operated by movement of a drive component of the hub relative to the remainder of the hub to move the links between collapsed and expanded positions carrying the drum segments with them.

It will be recognised that in a conventional drum, in order to ensure that the deck segments are circumferentially aligned in their expanded positions extreme accuracy in the construction and operation of the link mechanisms, and circumferential clearance between deck segment edges is needed. Accordingly it is difficult to produce such drums with a large range of movement between collapsed and fully expanded positions, and moreover it is difficult to control the lateral and radial positions of the deck segments, when in their expanded positions, and thus it is difficult to control lateral and radial run-out of the expanded drum. It is an object of the present invention to provide a tyre building drum in which the aforementioned difficulties are minimised or obviated.

US 2,603,581 discloses a tyre building drum having sets of circumferentially alternating large and small segments. The segments are expandable from a collapsed position in which the smaller segments are nested inside the larger segments. A mechanism is used to expand the segments by commencing expansion of the smaller segments before the larger segments so that all of the segments reach their fully-expanded position together.

In accordance with embodiments of a related aspect there is provided a tyre building drum comprising a rotatable hub assembly, a plurality of deck segments supported from the hub assembly through the intermediary of respective linkage arrangements for expanding and contracting movement between a collapsed position in which the drum has a relatively small overall diameter and an expanded position in which the deck segments define a cylindrical tyre building deck of the drum of significantly larger overall diameter, said deck segments comprising first and second sets of segments, the segments of the sets alternating in a circumferential direction in the expanded deck, such that a pair of segments of said first set lie immediately circumferentially adjacent, and on opposite circumferential sides respectively of each segment of the second set and vice-versa, the axially extending edges of the segments of said second set each including a circumferentially extending protrusion which underlies the deck surface of the adjacent segment of the first set, whereby the expanded segments interlock to resist radial loading on the deck in a direction to collapse the deck.

Preferably the axially extending edges of the segments also include surfaces which abuts in the fully expanded position of the deck segments to interlock the segments against relative axial movement.

Conveniently a drive arrangement including said linkage arrangements, for driving said segments between their collapsed and expanded positions is arranged to ensure that the segments of the first set reach their fully expanded position in advance of the segments of the second set, whereby the segments of the second set enter between the fully expanded segments of the first set so that the segments interlock in the fully expanded position of all of the segments.

In accordance with the present invention there is provided a tyre building tyre drum as defined in claim 1. Embodiments of the invention comprise a rotatable hub assembly, a plurality of deck segments supported from the hub assembly through the intermediary of respective linkage arrangements for expanding and contracting movement between a collapsed position, in which the drum has a relatively small overall diameter and an expanded position in which the deck segments define a cylindrical tyre building deck of the drum of significantly larger overall diameter. The deck segments comprise first and second sets of segments, the segments of the sets alternating in a circumferential direction in the expanded deck, such that a pair of segments of said first set lie immediately circumferentially adjacent, and on opposite circumferential sides respectively of each segment of the second set and vice-versa. The drum incorporates a drive arrangement including said linkage arrangements, for driving said segments between their collapsed and expanded positions, said drive arrangement ensuring that the segments of the first set reach their fully expanded position in advance of the segments of the second set, whereby during drum expansion said segments of the second set enter between the fully expanded segments of the first set.

Preferably in either aspect said drive arrangement ensures that the segments of the second set commence their collapsing movement from the fully expanded position prior to the commencement of the collapsing movement of the segments of the first set.

Desirably in either aspect the drive arrangement includes a common drive member for driving all of the linkage arrangements of the segments of the first and second sets, and a lost motion arrangement is incorporated between the drive member and the linkage arrangements of the segments of the first set whereby the drive member can continue to move, driving the linkage arrangements of the segments of the second set, after the segments of the first set have reached their fully expanded position.

Preferably, in either aspect, in the fully collapsed position of said segments, the axially extending edges of the segments of the first set are closely proximate one another, and the segments of the second set lie radially inwardly and beneath the segments of the first set.

One example of the invention is illustrated in the accompanying drawings wherein:-
Figure 1 is a diagrammatic cross-sectional view of part of a tyre building drum showing the deck segments thereof in a collapsed condition;
Figure 2 is a view similar to Figure 1 showing the deck segments in their expanded position;
Figure 3 is a view similar to Figure 2 but illustrating only the components directly involved in movement of the deck segments;
Figure 4 is a composite transverse cross-sectional view of the tyre building drum showing the segments (hatched) in a collapsed condition and also illustrating (in full lines) the segments in an expanded condition, and;
Figure 5 is an enlargement of part of Figure 1.

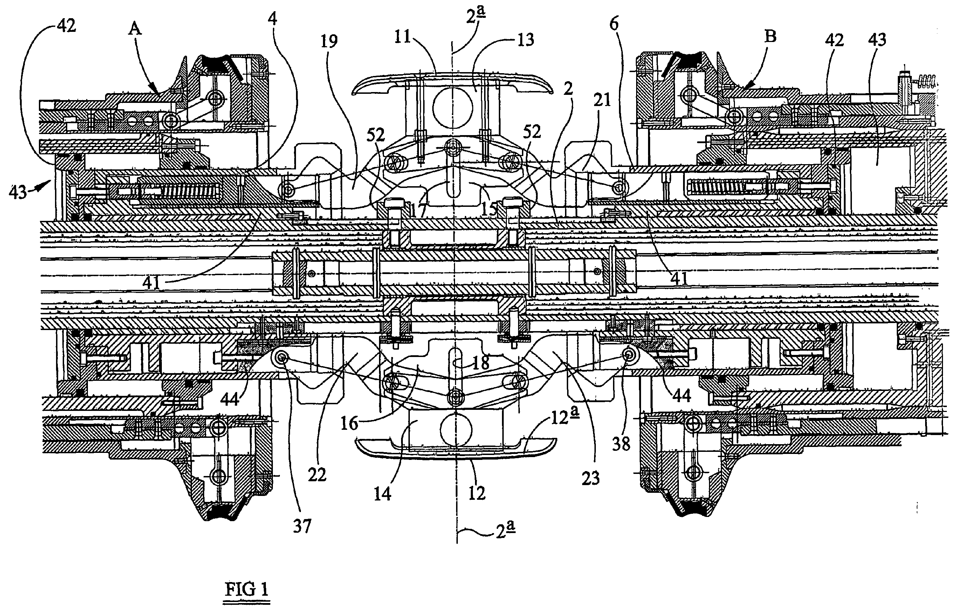

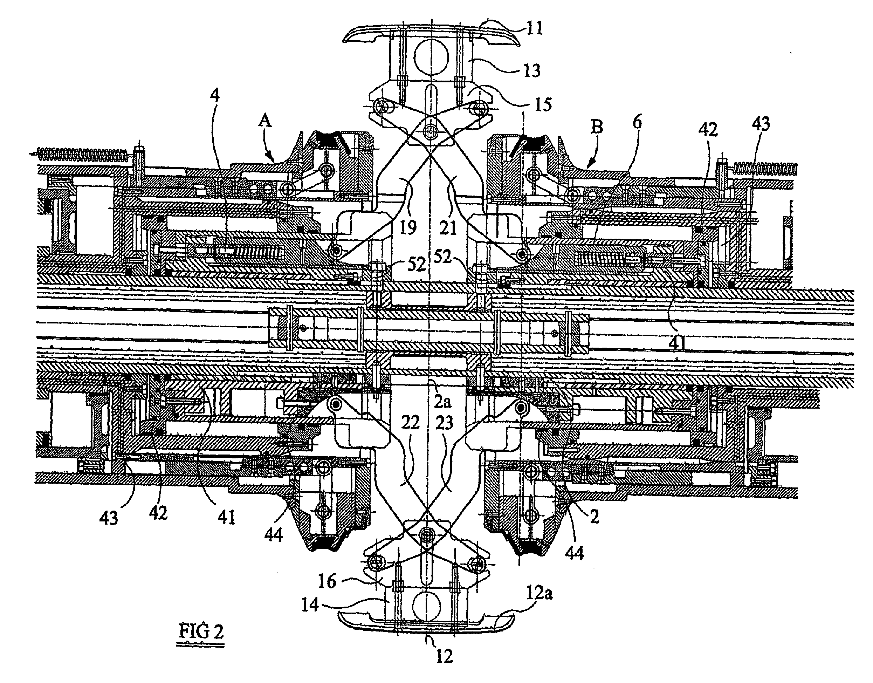

Referring to the drawings, it will be recognised that tyre building drums can exhibit various degrees of mechanical complexity dependent upon the stage or stages of tyre building which the drum is to facilitate. For-example, in addition to illustrating the collapsing and expanding movement of deck segments of the drum, Figures 1 and 2 also illustrate a movable beadlock assembly which forms no part of the present invention.

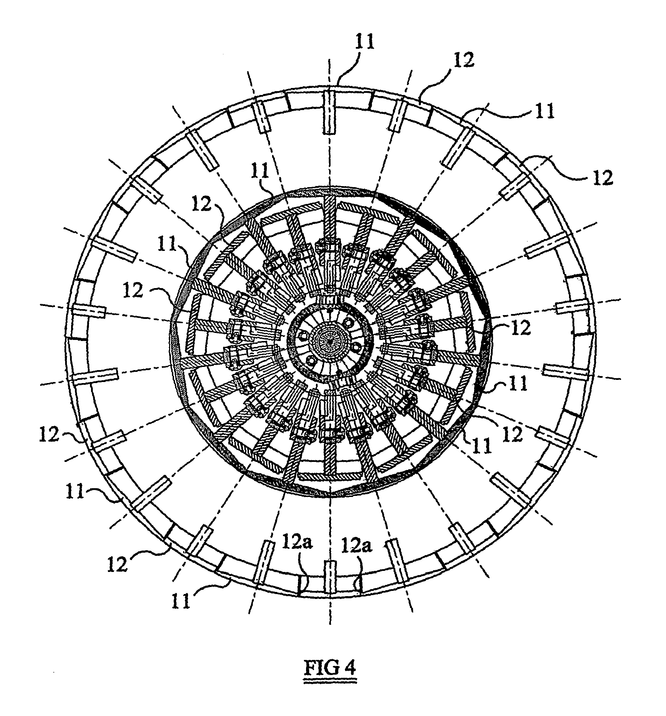

As is best shown in Figure 4, the drum is intended to have an expanded position in which a plurality of circumferentially alternating deck segments 11, 12 define a cylindrical deck upon which a tyre, or part of a tyre carcass, can be constructed. The segments 11 and 12 must be capable of being collapsed to produce a much smaller diameter assembly to release the tyre, or carcass, for axial removal from the drum. Figure 4 shows the segments 11, 12 collapsed (in hatched lines), and expanded (in full lines).

As is apparent from Figure 4 the circumferentially alternating segments 11, 12 comprise two distinct sets of segments, there being circumferentially long segments 11 interposed between adjacent circumferentially short segments 12. However, it will recognised from Figures 1, 2 and 3 that although the circumferential dimension of the segments 11, 12 is different the axial dimension, and the cross-sectional shape in an axial direction, of both the segment types is the same.

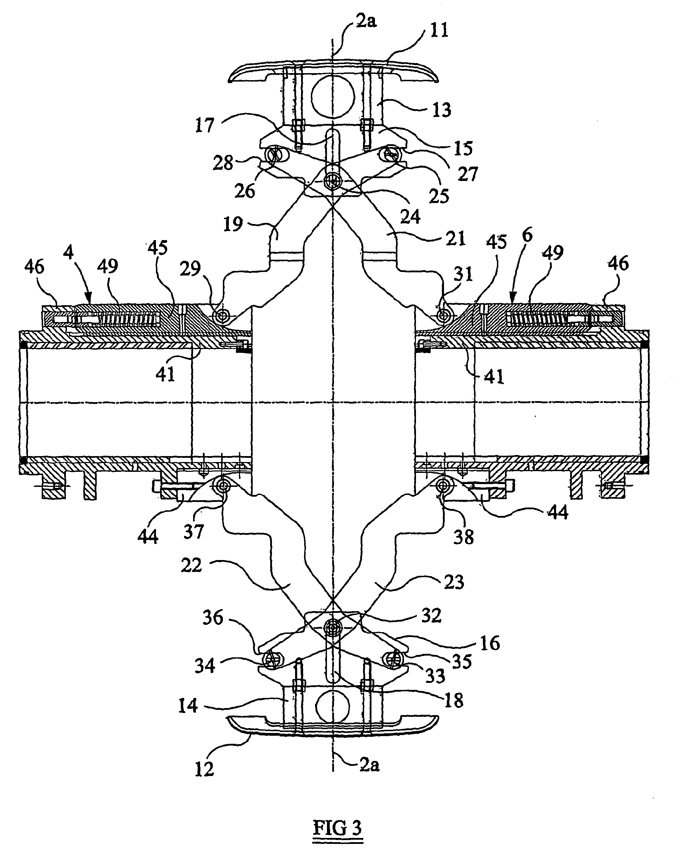

When comparing Figures 1, 2 and 3 of the accompanying drawings, to understand the operation of the tyre building drum, it must be recognised that while Figures 1 and 3 are approximately to the same scale, Figure 2 is drawn to a slightly smaller scale. Moreover, when comparing Figures 1 and 2 it can be seen that the beadlock assemblies A and B of the drum have moved axially of the drum in Figure 2 by comparison with their positions in Figure 1. The beadlock assemblies A and B are not of any relevance to the present invention.

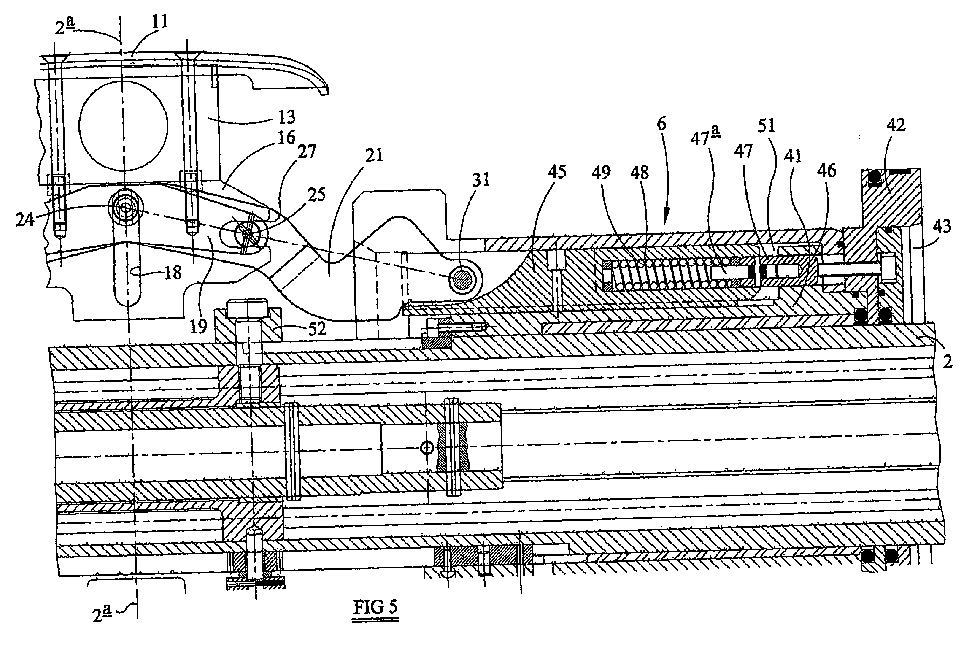

The tyre building drum includes an elongate hollow rotatable shaft 2 upon which is slidably mounted a hub assembly consisting of first and second axially spaced hub units 4, 6. The hub units 4, 6 of the hub are effectively mirror-images of one another about a transverse median plane 2a of the shaft 2 and the drum, and are moved in unison relative to the shaft axially towards and away from the median plane 2a. Both hub units rotate with the shaft 2, and axial movement of the hub units 4, 6 towards and away from the median plane of the shaft 2 serves to move the segments 11, 12 between their collapsed position (Figures 1 and 5) and their expanded positions (Figures 2 and 3).

It can be seen that each segment 11, 12 has a shaping such that in the expanded position of the drum the deck surface of each of the segments 11, 12 forms part of the deck surface of the drum, the shaping of the deck surface being determined by the nature of the tyre being built. Thus when viewed in axial cross-section as in Figures 1 to 3 and 5 the segments may be long and relatively flat with a gentle curvature in their mid region and more steeply curving axial end regions as shown in the drawings, or alternatively may be much more steeply curved where, for example, a motor cycle tyre is being constructed. The segments 11, 12 are conveniently formed by casting from an appropriate alloy, the casting subsequently being machined to give the final surface shape and profile. Each of the small segments 12 has, along both axial edges, a protruding lip 12a formed by machining away part of the outer surface of the segment to define a step. Thus the surface of the lip 12a lies beneath the level of the deck surface of its respective segment 12. The segments 11 have, along their axial edges, corresponding recesses for receiving the lips 12a so that in the fully expanded drum the segments 11, 12 abut circumferentially and interlock with one another to resist radial collapsing movement under radial loads applied to the deck. Also, by virtue of the curvature of the segments in an axial direction the interlocking segment formations resist relative axial movement between adjacent segments.

Each segment 11, 12 is secured to a respective spacer block 13, 14. The spacer blocks 13, 14 lie beneath the respective segment 11, 12 and are secured thereto by respective screws the countersunk heads of which are received within countersunk apertures in the deck surface of the respective segment.

Each spacer block 13, 14 is anchored on top of a respective carrier plate 15, 16, and the screws securing the segments 11, 12 to their respective blocks 13, 14 extend through the blocks and into the respective carrier plates 15, 16 to produce a rigid assembly of segment, spacer block, and carrier plate. The carrier plates are generally planar, and are disposed in planes containing, and extending radially outwardly from, the axis of rotation of the shaft 2. Each carrier plate 15, 16 has an elongate, radially extending slot 17, 18, the slots 17, 18 having their centre lines on the median plane of the shaft 2.

The carrier plates 15 of the large segments 11 are substantially identical to the carrier plates 16 of the small segments 12, but there are minor dimensional differences between the carrier plates 15 and 16 to facilitate an operative motion of the segments 12 which differs slightly from that of the segments 11. Each large deck segment 11 and its respective block 13 and carrier plate 15 constitute a rigid sub-assembly mounted for radial movement relative to the shaft 2 through the intermediary of first and second pivoting links 19, 21. Similarly, each smaller deck segment 12 and its spacer block 14 and carrier plate 16 constitute a rigid sub-assembly mounted for radial movement relative to the shaft 2 through the intermediary of first and second pivoting links 22, 23.

The links 19, 21 are identical, but are oppositely orientated. The two links are pivotally interconnected intermediate their ends by a pivot pin 24 which is also slidably received in the slot 17 of the respective carrier plate 15. The outermost end of each of the links 19, 21 is pivotally connected, by way of a respective pivot pin 25, 26 to the respective carrier plate 15 on opposite sides respectively of the slot 17. The pivot pins 25, 26 are received within axially extending slots 27, 28 in the carrier plate 15, the slots 27, 28 having a common axial centre line parallel to the axis of the shaft 2. At their opposite, innermost ends the links 19, 21 are pivotally connected by means of pivot pins 29, 31 to the axially movable hub units 4, 6 respectively.

Similarly the links 22, 23 are pivotally interconnected intermediate their ends by a pivot pin 32 slidably received in the slot 18 of the respective carrier plate 16. The outermost ends of the links 22, 23 are pivotally connected to the respective carrier plate 16 by pivot pins 33, 34 received in axial slots 35, 36 respectively in the respective carrier plate 16. The innermost ends of the links 22, 23 are pivotally connected by means of pivot pins 37, 38 to the hub assemblies 4, 6 respectively. The links 22, 23 are closely similar to the links 19, 21 differing in minor respects to effect minor differences between the movement geometry of the segments 11 and 12.

It will be recognised therefore that movement of the hub units 4, 6 in unison towards the median plane of the shaft 2 causes the links 19, 21 and 22, 23 simultaneously to perform a scissor-like action moving the respective carrier plates 15, 16 radially outwardly from the axis of the shaft 2 carrying the deck segments with them. Similarly movement of the hub units 4, 6 in unison away from the median plane of the shaft 2 retracts the deck segments 11, 12 towards the axis of the shaft 2.

Each hub unit 4, 6 includes an elongate sleeve 41 mounted for sliding movement on the shaft 2. At its axially outermost end remote from the median plane of the shaft 2, each sleeve 41 is secured to an annular piston head 42 slidable within a cylinder 43 of the tyre building drum. Simultaneous admission of hydraulic, or pneumatic fluid under pressure to the cylinders 43 drives the assemblies of sleeve 41 and piston head 42 towards the median plane 2a of the shaft 2. The links 22, 23 of the small deck segments 12 are pivotally mounted, at their inner ends, by way of the pivot pins 37, 38 in respective guide grooves of respective bearing blocks 44 anchored directly to the respective sleeve 41. The inner ends of the links 19, 21 of the large deck segments 11 are pivotally connected by the pivot pins 29, 31 in guide grooves of respective bearing blocks 45. However, whereas the bearing blocks 44 are secured directly to their respective sleeve 41, the bearing blocks 45 are slidable through a small, permitted, range of axial movement relative to their respective sleeve 41.

As is apparent from Figure 5 each sleeve 41 has a plurality of radially outwardly projecting, circumferentially spaced integral lugs 46 each of which acts as an anchor for an axially extending elongate guide pin 47 which extends axially into a corresponding axially extending bore 48 in a respective bearing block 45. Housed within each bore 48 is a compression spring 49 acting at one end against the closed end of the bore 48 and acting at its opposite end against the guide pin 47. A protrusion 47a of the guide pin 47 extends into the spring 48 to ensure alignment of the spring 48 and the guide pin 47. The spring 49 urges the block 45 to assume a rest position in which the axially outermost end of the block 45 is spaced by a clearance 51 (Figure 5) from the respective lug 46. Thus if the piston head 42 and sleeve 41 are driven towards the median plane of the shaft 2, but the block 45 is held against axial movement then the sleeve 41 will move relative to the block 45 compressing the spring 49 and taking up the clearance 51.

In the collapsed position of the drum the hub units 4, 6 have been retracted away from the median plane of the shaft 2 conveniently by the application of hydraulic or pneumatic pressure to the piston heads 42 on their faces opposite the face exposed to their respective pressure cylinder 43. The springs 49 are fully extended so that the clearances 51 exist between the bearing blocks 45 and the lugs 46, and the deck segments 11, 12 are collapsed to the positions shown in hatched lines in Figure 4 in which the axial edges of the larger deck segments 11 abut and the smaller deck segments 12 are received beneath the larger deck segments 11, that is to say are disposed radially inwardly therefrom.

In order to expand the drum to provide the large diameter cylindrical deck upon which the tyre is built, pressure is applied to the cylinders 43 of both hub units 4, 6 to drive the sleeves 41 towards the median plane of the shaft 2. The springs 49 are sufficiently strong to act as rigid spacers during this part of the movement of the sleeves 41, and so the links 19, 21 and the links 22, 23 are moved in unison and pivot displacing their deck segments 11, 12 radially outwardly. There are some minor changes in the geometry of movement of the links 19, 21 by comparison with the links 22, 23 but these differences are not of significance to the present invention. It will be recognised that because the segments 12 were below the segments 11 in the collapsed condition of the drum, then during the simultaneous radial outward movement of the segments 11 and 12 the segments 12 will lag radially behind the segments 11.

It will be recognised that each sleeve 41 carries both bearing blocks 44 fixed thereto, and slidable bearing blocks 45, the bearing blocks 44 and 45 being positioned alternately around the circumference of their respective sleeve 41. The shaft 2 carries abutments 52 against which the bearing blocks 45 can engage to define the limit of movement of the bearing blocks 45 towards the median plane of the shaft 2, and thus to limit radial expansion of the large deck segments 11. There is a greater axial spacing, in the collapsed position of the drum, between the bearing blocks 44 and the abutments 52, than exists between the bearing blocks 45 and the abutments 52. Thus during expansion movement of the drum, after engagement of the bearing blocks 45 with the abutments 52, whereby the expanded position of the larger deck segments 11 has been achieved, the sleeves 41 can continue to move under the action of the pressure in the cylinders 43, against the action of the springs 49, taking up the clearances 51 between the bearing blocks 45 and the lugs 51 of the sleeves 41. Although the blocks 45 have been arrested and larger deck segments 11 have achieved their fully expanded position, the blocks 44 continue to move axially with their sleeves 41 so that the smaller deck segments 12 continue to move radially outwardly to enter and occupy the spaces between circumferentially adjacent segments 11.

As the segments 12 move into position between the segments 11 the lips 12a of the segments 12 engage the undercut areas of the segments 11 so that the segments 11,12 interlock both to resist radial forces on the deck surface of the drum and to resist lateral forces tending to move the segments 11, 12 axially of the drum relative to one another. The movement of the smaller deck segments 12 ceases when the deck segments 12 interlock with the deck segments 11, and simultaneously the bearing blocks 44 engage the abutments 52.

In the fully expanded position of the drum the clearances 51 are almost completely absorbed, and the springs 49 are in compression. Thus when it is required to collapse the drum and pressure is applied to the opposite faces of the pistons 42 to move the sleeves 41 away from one another, then initial movement of the sleeves 41 takes place without corresponding movement of the blocks 45, the springs 49 expanding to re-establish the clearances 51 between the blocks 45 and the lugs 46. However, the blocks 44 move immediately and so the smaller deck segments 12 start their collapsing movement before the collapsing movement of the larger deck segments 11 commences. Thus the smaller deck segments are withdrawn radially inwardly from between the larger deck segments 11 permitting the larger deck segments thereafter to commence their collapsing movement.

Sleeve 41 is provided with an abutment (not shown). In the view illustrated in Figure 5, the abutment extends out of the plane of the paper. The bearing block 45 is provided with an abutment surface (not shown). As the clearances 51 are taken up as the drum moves to the fully expanded position the abutment is moved away from the abutment surface. When the movement of the sleeve is reversed to collapse the drum and the springs 49 expand to re-establish the clearances 51, the abutment moves into contact with the abutment surface and thereafter the abutment draws the bearing block 45 back with the sleeve 41.

The drum construction described above, in which a lost motion arrangement is provided to allow the segments 12 to lag behind the segments 11, but still to be driven radially into their fully expanded position between the segments 11 after the segments 11 have reached their fully expanded position, permits the construction of a drum in which there can be zero clearance between adjacent segments in the fully expanded position of the deck. This in turn achieves a very high degree of lateral and radial deck stability and accuracy which is extremely beneficial in the accurate manufacture of tyres. Furthermore, a large range of movement between fully expanded and fully collapsed positions is obtained by virtue of this drum construction, and this in turn allows the drum to be used in the manufacture of a large range of different tyre, using different segment profiles and spacer block dimensions. Furthermore, deck segments 11, 12 and spacer blocks 13, 14 can be changed relatively easily, without disassembly of the remainder of the drum.

## Claims

1. A tyre building drum comprising a rotatable hub assembly (4,6), a plurality of deck segments (11,12) supported from the hub assembly (4,6) through the intermediary of respective linkage arrangements (19,21, 22, 23) for expanding and contracting movement between a collapsed position in which the drum has a relatively small overall diameter and an expanded position in which the deck segments (11,12) define a cylindrical tyre building deck of the drum of significantly larger overall diameter, said deck segments (11,12) comprising first (11) and second (12) sets of segments, the segments of the sets alternating in a circumferential direction in the expanded deck, such that a pair of segments (11) of said first set lie immediately circumferentially adjacent, and on opposite circumferential sides respectively of each segment (12) of the second set and vice-versa, the drum incorporating a drive arrangement (41, 42, 43) including said linkage arrangements (19,21, 22, 23), for driving said segments (11, 12) between their collapsed and expanded positions, **characterized in that** the drive arrangement ensures that the segments (11) of the first set reach their fully expanded position in advance of the segments (12) of the second set, whereby during drum expansion said segments (12) of the second set enter between the fully expanded segments (11) of the first set.

2. A tyre building drum according to claim 1, wherein said drive arrangement (41, 42, 43) ensures that the segments (12) of the second set commence their collapsing movement from the fully expanded position prior to the commencement of the collapsing movement of the segments (11) of the first set.

3. A tyre building drum according to any previous claim, wherein the drive arrangement (41, 42, 43) includes a common drive member for driving all of the linkage arrangements (19,21, 22, 23) of the segments (11, 12) of the first and second sets, and a lost motion arrangement (47, 48, 49) is incorporated between the drive member and the linkage arrangements (19,21) of the segments (I 1) of the first set whereby the drive member can continue to move, driving the linkage arrangements (22, 23) of the segments (12) of the second set, after the segments (11) of the first set have reached their fully expanded position.

4. A tyre building drum according to any previous claim, wherein in the fully collapsed position of said segments (11, 12), the axially extending edges of the segments (11) of the first set are closely proximate one another, and the segments (12) of the second set lie radially inwardly and beneath the segments (11) of the first set.

5. A tyre building drum according to any previous claim wherein the axially extending edges of the segments (12) of one of said first and second sets each include a circumferentially extending protrusion (12a) which underlies the deck surface of the adjacent segment (11) of the other of said first and second sets, whereby the expanded segments interlock to resist radial loading on the deck in a direction to collapse the deck.

6. A tyre building drum according to claim 5 wherein the axially extending edges of the segments (11, 12) also include surfaces which abut in the fully expanded position of the deck segments (11,12) to interlock the segments against relative axial movement.

7. A tyre building drum according to any preceding claim, wherein the deck segments (11, 12) have a curvature when viewed in axial cross-section.

## Patentansprüche

1. Reifenbautrommel mit einer drehbaren Nabeneinrichtung (4, 6), mehreren von der Nabeneinrichtung (4, 6) durch das Zwischenstück zugehöriger Verbindungsanordnungen (19, 21, 22, 23) gelagerten Trägersegmenten (11, 12) zur ausfahrenden und kontrahierenden Bewegung zwischen einer kollabierten Stellung, in welcher die Trommel einen relativ geringen Gesamtdurchmesser aufweist, und einer ausgefahrenen Stellung, in welcher die Trägersegmente (11, 12) einen zylindrischen Reifenbauträger der Trommel mit beträchtlich größerem Gesamtdurchmesser definieren,
wobei die Trägersegmente (11, 12) erste (11) und zweite (12) Segmentsätze umfassen,
wobei die Segmente der Sätze in einer Umfangsrichtung bei ausgefahrenem Träger alternieren, so dass bezüglich jeden Segmentes (12) des zweiten Satzes ein Paar von Segmenten (11) des ersten Satzes in Umfangsrichtung direkt benachbart und an in Umfangsrichtung gegenüberliegenden Seiten liegt und umgekehrt,
wobei die Trommel eine die Verbindungsanordnungen (19, 21, 22, 23) umfassende Antriebsanordnung (41, 42, 43) zum Antreiben der Segmente (11, 12) zwischen ihren kollabierten und ausgefahrenen Stellungen aufweist,
**dadurch gekennzeichnet, dass**
die Antriebsanordnung sicherstellt, dass die Segmente (11) des ersten Satzes ihre vollständig ausgefahrene Stellung vor den Segmenten (12) des zweiten Satzes erreichen, wodurch die Segmente (12) des zweiten Satzes während des Ausfahrens der Trommel zwischen die vollständig ausgefahrenen Segmente (11) des ersten Satzes eintreten.

2. Reifenbautrommel nach Anspruch 1, wobei die Antriebsanordnung (41, 42, 43) sicherstellt, dass die Segmente (12) des zweiten Satzes ihre kollabierende Bewegung aus der vollständig ausgefahrenen Stellung vor dem Beginnen der kollabierenden Bewegung der Segmente (11) des ersten Satzes beginnen.

3. Reifenbautrommel nach einem der vorstehenden Ansprüche, wobei die Antriebsanordnung (41, 42, 42) ein gemeinsames Antriebselement zum Antreiben aller Verbindungsanordnungen (19, 21, 22, 23) der Segmente (11, 12) der ersten und zweiten Sätze umfasst, und zwischen dem Antriebselement und den Verbindungsanordnungen (19, 21) der Segmente (11) des ersten Satzes eine Leerlaufbewegungsanordnung (47, 48, 49) eingebaut ist, wodurch das Antriebselement mit dem Bewegen fortfahren kann, die Verbindungsanordnungen (22, 23) der Segmente (12) des zweiten Satzes antreibend, nachdem die Segmente (11) des ersten Satzes ihre vollstandig ausgefahrene Stellung erreicht haben.

4. Reifenbautrommel nach einem der vorstehenden Ansprüche, wobei in der vollständig kollabierten Stellung der Segmente (11, 12) die sich axial erstreckenden Ränder der Segmente (11) des ersten Satzes eng zueinander benachbart sind, und die Segmente (12) des zweiten Satzes radial einwärts und unterhalb der Segmente (11) des ersten Satzes liegen.

5. Reifenbautrommel nach einem der vorstehenden Ansprüche, wobei die sich axial erstreckenden Ränder der Segmente (12) des ersten oder des zweiten Satzes jeder einen sich in Umfangsrichtung erstreckenden Vorsprung (12a) umfassen, welcher unter der Trägerfläche des benachbarten Segmentes (11) des anderen des ersten oder zweiten Satzes liegt, wodurch die ausgefahrenen Segmente verriegeln, um einer radialen Belastung auf den Träger in einer den Träger kollabierenden Richtung zu widerstehen.

6. Reifenbautrommel nach Anspruch 5, wobei die sich axial erstreckenden Ränder der Segmente (11, 12) außerdem Flächen umfassen, die in der vollständig ausgefahrenen Stellung der Trägersegmente (11, 12) anliegen, um die Segmente gegen eine relative Axialbewegung zu verriegeln.

7. Reifenbautrommel nach einem der vorstehenden Ansprüche, wobei die Trägersegmente (11, 12) in axialem Querschnitt gesehen eine Krümmung aufweisen.

## Revendications

1. Tambour de confection de pneu comprenant un assemblage de moyeu (4, 6) rotatif, une pluralité de segments de plateau (11, 12) supportés par l'assemblage de moyeu (4, 6) par l'intermédiaire d'agencements de liaison (19, 21, 22, 23) respectifs pour un mouvement d'extension et de contraction entre une position repliée dans laquelle le tambour a un diamètre global relativement petit et une position étendue dans laquelle les segments de plateau (11, 12) définissent un plateau de confection de pneu cylindrique du tambour avec un diamètre global considérablement plus grand, lesdits segments de plateau (11, 12) comprenant des premier (11) et deuxième (12) ensembles de segments, les segments des ensembles alternant dans une direction circonférentielle dans le plateau étendu, de sorte que deux segments (11) dudit premier ensemble se trouvent immédiatement circonférentiellement adjacents, et sur des côtés circonférentiels opposés respectivement de chaque segment (12) du deuxième ensemble et vice versa, le tambour incorporant un agencement d'entraînement (41, 42, 43) comprenant lesdits agencements de liaison (19, 21, 22, 23), pour entraîner lesdits segments (11, 12) entre leurs positions repliée et étendue, **caractérisé en ce que** l'agencement d'entraînement garantit que les segments (11) du premier ensemble atteignent leur position entièrement étendue avant les segments (12) du deuxième ensemble, moyennant quoi, pendant l'extension du tambour, lesdits segments (12) du deuxième ensemble pénètrent entre les segments (11) entièrement étendus du premier ensemble.

2. Tambour de confection de pneu selon la revendication 1, dans lequel ledit agencement d'entraînement (41, 42, 43) garantit que les segments (12) du deuxième ensemble commencent leur mouvement de repliement à partir de la position entièrement étendue avant le commencement du mouvement de repliement des segments (11) du premier ensemble.

3. Tambour de confection de pneu selon l'une quelconque des revendications précédentes, dans lequel l'agencement d'entraînement (41, 42, 43) comprend un élément d'entraînement commun pour entraîner tous les agencements de liaison (19, 21, 22, 23) des segments (11, 12) des premier et deuxième ensembles, et un agencement à mouvement perdu (47, 48, 49) est incorporé entre l'élément d'entraînement et les agencements de liaison (19, 21) des segments (11) du premier ensemble, moyennant quoi l'élément d'entraînement peut continuer de se déplacer, entraînant les agencements de liaison (22, 23) des segments (12) du deuxième ensemble, après que les segments (11) du premier ensemble ont atteint leur position entièrement étendue.

4. Tambour de confection de pneu selon l'une quelconque des revendications précédentes, dans lequel, dans la position entièrement repliée desdits segments (11, 12), les bords s'étendant axialement des segments (11) du premier ensemble sont à proximité étroite les uns des autres, et les segments (12) du deuxième ensemble se trouvent radialement vers l'intérieur et au-dessous des segments (11) du premier ensemble.

5. Tambour de confection de pneu selon l'une quelconque des revendications précédentes, dans lequel les bords s'étendant axialement des segments (12) de l'un desdits premier et deuxième ensembles comprennent chacun une protubérance (12a) s'étendant circonférentiellement qui est sous-jacente à la surface de plateau du segment (11) adjacent de l'autre desdits premier et deuxième ensembles, moyennant quoi les segments étendus se verrouillent mutuellement pour résister à la charge radiale appliquée au plateau dans une direction pour replier le plateau.

6. Tambour de confection de pneu selon la revendication 5, dans lequel les bords s'étendant axialement des segments (11, 12) comprennent également des surfaces qui viennent en butée dans la position entièrement étendue des segments de plateau (11, 12) pour verrouiller mutuellement les segments par rapport à un mouvement axial relatif.

7. Tambour de confection de pneu selon l'une quelconque des revendications précédentes, dans lequel les segments de plateau (11, 12) présentent une courbure lorsqu'ils sont vus en coupe axiale.
